# EUROPÄISCHE PATENTSCHRIFT

(11) **EP 3 492 792 B1**
(45) Veröffentlichungstag und Bekanntmachung des Hinweises auf die Patenterteilung: **31.03.2021**
(21) Anmeldenummer: 18209077.9
(22) Anmeldetag: 29.11.2018
(51) Int. Cl.: F16L 11/127, H05F 3/02

(54) **VORRICHTUNG ZUM TRANSPORT EINES MEDIUMS UND KONFEKTIONIERUNGSVERFAHREN**
DEVICE FOR TRANSPORTING A MEDIUM AND PACKAGING METHOD
DISPOSITIF DE TRANSPORT D'UN MILIEU ET PROCÉDÉ DE PRÉPARATION

(30) Priorität: 04.12.2017 DE 102017128760
(43) Veröffentlichungstag der Anmeldung: 05.06.2019
(73) Patentinhaber: KME Special Products GmbH, 49074 Osnabrück (DE); AGT-PSG GmbH & Co. KG, 61449 Steinbach (DE)
(72) Erfinder: Böhlke, Dr. Peter, 49492 Westerkappeln (DE); Boldt, Raimund, 49084 Osnabrück (DE); Daniewski, Peter, 49504 Lotte-Wersen (DE); Krämer, Eduard, 49134 Wallenhorst (DE); Wobker, Dr. Hans-Günter, 49565 Bramsche (DE); Hefter, Gerhard, 63110 Rodgau (DE)
(74) Vertreter: Griepenstroh, Jörg

(56) Entgegenhaltungen:
- EP-A1- 2 103 856
- WO-A2-2015/014332
- DE-A1-102011 018 243
- DE-B3-102013 217 159

## Beschreibung

Die Erfindung betrifft eine Vorrichtung zum Transport eines Mediums, mit wenigstens einem sich in einer Axialrichtung erstreckendem Kanal, durch den das Medium geführt wird, wobei der jeweilige Kanal von einer elektrisch leitenden inneren Umhüllung umgeben ist, die mit einem Potentialausgleichsleiter verbunden ist, und mit einem Außenmantel, wobei zwischen dem Kanal und dem Außenmantel eine elektrisch leitende äußere Umhüllung vorgesehen ist, wobei die äußere Umhüllung mit einem elektrisch leitenden Potentialausgleichsleiter verbunden ist, wobei zwischen dem Kanal und der äußeren Umhüllung eine elektrisch isolierende Zwischenschicht angeordnet ist, wobei die Zwischenschicht aus wärmedämmendem Material gefertigt ist und wobei die Vorrichtung wenigstens ein Endstück aufweist, auf dem eine Kappe aufgebracht ist. Sie betrifft weiterhin ein Konfektionierungsverfahren für eine derartige Vorrichtung.

Derartige Vorrichtungen können beispielweise als Analysenleitungen ausgebildet sein, durch die eine Probe eines fluiden, insbesondere gasförmigen, Mediums, aber auch von Stäuben, zu von einer Probenahmestelle zu einer Analysenstation weitergeleitet wird, in der sie dann untersucht wird. Sie dienen dann gewissermaßen als Messleitungen im Rahmen von Probegasmessungen.

In explosionsgefährdeten Bereichen bzw. Zonen, z.B. räumlichen Bereichen, in denen leicht entzündliche Gase oder Dämpfe entstehen, besteht die Gefahr, dass aufgrund elektrostatischer Aufladung der Analysenleitung Zündfunken entstehen, die zu einer Explosion des Gas-, Dampf- und/oder Staubgemisches führen können. Derartige Zonen werden als Ex-Bereiche bezeichnet und kommen in unterschiedlichen Industriezweigen und Industriebereichen vor.

Zur Vermeidung elektrostatischer Aufladungen sind im Stand der Technik verschiedene Lösungen bekannt. Bei vorkonfektionierten Leitungen müssen die Analysenleitungen oder Rohrbündel in einem nach ATEX zertifizierten Betrieb bereits mit Anfangs- und Endkonfektion fertig konfektioniert werden. Die Leitungen lassen sich nach Konfektion Vorort nicht mehr kürzen. Bei diesen Leitungen werden ableitfähige Ringwell-Schläuche verwendet, welche die Aufladung des Außenmantels über ein Kupfergeflecht nach innen ableiten.

Zum Stand der Technik ist die DE 10 2016 002 103 A1 zu nennen. Es wird eine mehrschichtige beheizbare Medienleitung und die Konfektionierung einer solchen Medienleitung offenbart. Die Medienleitung besitzt ein inneres Leitungslumen zum Durchtritt von Medium, insbesondere eines gefriergefährdeten Mediums. Die Leitungswandung der Medienleitung besteht zumindest aus zwei Materialschichten, wobei die Materialschichten zumindest eine Permeationsbarriere bilden und/oder eine Rissbildung verhindernde oder verzögernde Innenschicht, zumindest eine auf der zumindest einen Innenschicht angeordnete mechanische Festigkeit und/oder Druckfestigkeit verleihende zweite Schicht, zumindest eine auf der zumindest einen zweiten Schicht angeordnete elektrisch leitfähige dritte Schicht und zumindest eine auf der zumindest einen elektrisch leitfähigen Dritten Schicht angeordnete thermische und/oder elektrische isolierende vierte Schicht aufweist. Die mehrschichtig beheizbare Medienleitung soll vorzugsweise Außendurchmesser von 4 bis 12 mm besitzen. Bevorzugt handelt es sich um eine konfektionierte Medienleitung mit einem endseitig an der Medienleitung angeordneten Anschlussbauteil. Das Material des Anschlussbauteils soll an das Material der zweiten Schicht angeschlossen sein, welches der Medienleitung eine mechanische Festigkeit und/oder Druckfestigkeit verleiht. Die Anschlussbauteile sind daher nicht dazu vorgesehen, an eine elektrisch leitfähige Schicht angeschlossen zu werden.

Eine Verwendung in explosionsgefährdeten Zonen scheidet damit aufgrund der elektrisch nicht leitenden Anschlussbauteile aus.

Eine Vorrichtung zum Transport eines Mediums ist in der DE 10 2013 217 159 A1 offenbart. Diese Vorrichtung ermöglicht das Kürzen der Leitung bauseitig, die elektrostatische Aufladung des Außenmantels wird durch eine darunterliegende leitfähige Schicht (insbesondere eine Folie aus Aluminium) abgeleitet. Die Ableitung von Ladung funktioniert dabei zuverlässig, wenn der Außenmantel nicht dicker als 2,0 mm ist, aber nicht für die ATEX Gasklasse IIC. Da in Werken der chemischen und petrochemischen Industrie jedoch oftmals auch IIC-Zonen vorherrschen, kann eine derartige Vorrichtung nur in bestimmten Bereichen eingesetzt werden. So dürfte für einen Einsatz in der Gasklasse IIC der Außenmantel lediglich eine Dicke von 0,2 mm aufweisen. Dies ist einerseits produktionstechnisch nicht realisierbar, andererseits böte ein derart dünner Außenmantel keinen Schutz mehr vor Außeneinflüssen.

Die EP 2 103 856 A1 offenbart einen Schlauch, der sich durch folgenden Schichtaufbau auszeichnet: Eine Innenschicht aus einem elektrisch leitfähigen oder elektrisch leitfähigen einstellbaren Kunststoff, eine elastomere Zwischenschicht, die mit der Innenschicht einen dauerhaften festen Verbund bildet, eine erste und zweite Festigkeitsträgerschicht, wobei die erste Festigkeitsträgerschicht mit der ersten Zwischenschicht in direkter Verbindung steht, wobei beide Festigkeitsträgerschichten durch eine zweite elastomere Zwischenschicht voneinander getrennt sind, sowie eine abriebfeste elastomere Außenschicht, die in direkter Verbindung mit der zweiten Festigkeitsträgerschicht steht. Die erste und zweite Zwischenschicht sowie die Außenschicht sind insbesondere ebenfalls elektrisch leitfähig ausgeführt, wobei im Bereich der zweiten Zwischenschicht zusätzlich eine Wendel angeordnet ist. Ein solcher Schlauch findet in der Chemie-, Pharma- und Lebensmittelindustrie seine Anwendung.

Der Erfindung liegt daher die Aufgabe zugrunde, eine Vorrichtung der oben genannten Art dahingehend zu verbessern, dass sie bei gleichzeitiger Konfektonierungsmöglichkeit eine bessere Ableitfähigkeit in explosionsgefährdeten Zonen, insbesondere IIC-Zonen, bietet. Weiterhin soll ein entsprechendes Konfektionierungsverfahren angeben werden.

In Bezug auf die Vorrichtung wird diese Aufgabe erfindungsgemäß dadurch gelöst, dass der Außenmantel elektrisch leitfähig ausgebildet ist mit einem elektrischen Widerstand ≤ 10⁹ Ωm, wobei die Kappe elektrisch leitfähig ist und wobei auf der Kappe und bereichsweise auf dem Außenmantel ein leitfähiger Schrumpfschlauch aufgebracht ist, der die Kappe befestigt und leitfähig mit dem Außenmantel verbindet.

Der Begriff "leitfähig" im Sinne der Erfindung umfasst gleichzeitig auch die Ableitfähigkeit. Ableitfähig ist ein Stoff oder ein Material mit einem spezifischen Widerstand von mehr als 10⁴ Ωm und weniger als 10⁹ Ωm. Als leitfähig wird in den technischen Richtlinien ein Stoff oder Material mit einem spezifischen elektrischen Widerstand ≤ 10⁴ Ωm angesehen. Die Erfindung erfasst daher Außenmäntel mit einem spezifischen elektrischen Widerstand ≤ 10⁹ Ωm.

Vorteilhafte Ausgestaltungen der Erfindung sind Gegenstand der Unteransprüche.

Die Erfindung geht von der Überlegung aus, dass bekannte vorkonfektionierte Leitungen vor Ort nicht kürzbar sind. Neben der Beeinträchtigung der Eigenschaften des Mantels an sich erfordert eine derartige Konfiguration auch in der Regel eine Vorkonfektionierung der Vorrichtung, da die Anfangs- und Endseite bzw. Proben-und Analysenseite mit Endkappen abgeschlossen sein müssen. Dadurch ist von vorne herein auch die Länge der Leitung festgelegt. Der dabei verwendete Ringwell-Mantel hat keine glatte Oberfläche, sodass es bei der Verlegung an scharfen Kanten zur Beschädigung bzw. Zerstörung des Außenmantels kommen kann. Bleibt eine derartige Beschädigung unbemerkt, kann dies neben der Beeinträchtigung des Probentransportes in explosiven Bereich auch zu gefährlichen Situationen wie beispielsweise Explosionen führen. Zudem ist ein ableitfähiger Ringwell-Mantel sehr dünn und bietet daher keinen Langzeitschutz gegen witterungsbedingte Einflüsse.

Andere oben beschriebene Analyseleitungen wiederum lassen sich nicht in IIC-Bereichen verwenden. Es wäre somit wünschenswert, eine konfektionierbare Vorrichtung zu haben, die konfektionierbar ist und in hoch explosiven Bereichen eingesetzt werden kann und welche einen Außenmantel aufweist, der die Leitung ausreichend schützt.

Wie nunmehr erkannt wurde, lassen sich diese Zielsetzungen gleichzeitig dadurch erreichen, dass eine vom Mantel getrennte elektrisch leitende Umhüllung verwendet wird und gleichzeitig der Außenmantel leitfähig ausgebildet wird. Durch den Potentialausgleich zwischen dieser Umhüllung mit Erdpotential, also die Erdung dieser Umhüllung, können Potentialdifferenzen vermieden werden, die zu der Entstehung von Zündfunken und somit zu Explosionen führen könnten. Ladungen können vom Außenmantel direkt zur leitenden Umhüllung, die radial innerhalb des Außenmantels angeordnet ist, abfließen. Auf diese Weise können auch große Ladungsmengen schnell abfließen.

Der Außenmantel ist bevorzugt aus aus einem thermoplastischen Kunststoff mit 1 bis 6 Gew.-% Carbon-Nano-Tubes (CNTs) gebildet bzw. gefertigt. Die Leitfähigkeit des Außenmantels wird bevorzugt realisiert, indem einem thermoplastischen Urethan Kohlenstoff in Form von CNTs mit bevorzugt 4 bis 6 Gew.-% zugesetzt wird. Höhere Anteile von CNTs senken den spezifischen elektrischen Widerstand. Die CNTs sind bevorzugt Multi-Wall-CNTs (MWCNT). Es kann sich bei den CNTs auch um ein Gemenge aus Single-Wall (SWCNT) und MWCNTs handeln, insbesondere mit einem überwiegenden Anteil von MWCNTs.

Die Vorrichtung weist ein Endstück auf, auf dem eine leitfähige Kappe aufgebracht ist. Die Kappe ist dabei bevorzugt aus Polytetrafluorethylen (PTFE) gefertigt.

Auf der Kappe und bereichsweise auf dem Außenmantel bzw. einem Ende des Außenmantels ist ein leitfähiger Schrumpfschlauch aufgebracht bzw. aufgeschrumpft, der die Kappe befestigt und leitfähig mit dem Außenmantel verbindet. Der Schrumpfschlauch ist bevorzugt gebildet aus ableitfähigem PE, ableitfähigem Kleber auf PA-Basis und ist insbesondere frei von Blei und Cadmium. Dadurch dass Außenmantel, Kappe und Schrumpfschlauch aus leitfähigen Materialen bestehen, ist auch an dem konfektionierten Ende eine hohe Ableitfähigkeit gegeben.

Die Umhüllung kann innen an dem Außenmantel direkt anliegen und ihn somit von innen berühren. Aus fertigungstechnischen Gründen kann aber zwischen Außenmantel und äußerer Umhüllung eine, insbesondere elektrisch leitende, Zwischenschicht, insbesondere eine Folie, die zusätzlichen Schutz bietet, vorgesehen sein. Die äußere Umhüllung ist vorzugsweise als Metallfolie ausgebildet, die gewissermaßen als elektrostatisch leitfähiger Schutzschirm fungiert.

Die Vorrichtung ist in einer besonders bevorzugten Ausführungsform als Analysenleitung zum Transport von Gasen, Flüssigkeiten und/oder Stäuben ausgestaltet. Besonders bevorzugt ist sie für Anwendungen im explosionsgefährdeten Bereich (Ex-Umgebung gemäß Richtlinie 94/9/EG) ausgebildet.

Die Potentialausgleichsleiter bzw. Beidrähte sind bevorzugt aus Kupfer (CU-ETP1) und die innere und äußere Umhüllung sind vorzugsweise aus Aluminium gefertigt, d.h. als radial umhüllende, im Wesentlichen zylinderförmige Aluminiumfolie ausgebildet.

Zwischen dem Kanal und der äußeren Umhüllung ist erfindungsgemäß eine Zwischenschicht angeordnet. Die Zwischenschicht ist dabei aus wärmedämmendem Material gefertigt.

Erfindungsgemäß ist der jeweilige Kanal von einer elektrisch leitenden inneren Umhüllung umgeben, die mit einem Potentialausgleichsleiter verbunden ist. Das heißt, zusätzlich zu der äußeren Umhüllung ist auch eine innere Umhüllung zum Abtransport von Ladungen vorgesehen. Eine derartige Konfiguration ist dann vorteilhaft, wenn auch insbesondere im Inneren der Vorrichtung, z.B. in den oder im Bereich der Kanäle, elektrische Aufladungen entstehen können. In Kombination damit oder alternativ dazu kann auch der jeweilige Kanal aus elektrisch leitfähigem Material, beispielsweise einem Nichteisenmetall (NE-Metall) bestehen und über einen Potentialausgleichsleiter geerdet sein, so dass direkt von dem Kanal Ladungen abfließen können. Wird der jeweilige elektrisch leitende Kanal direkt geerdet, kann also auf eine innere elektrisch leitende Umhüllung gegebenenfalls verzichtet werden.

Zur Ableitung von elektrischer Ladung in den Erdboden sind vorteilhafterweise die Potentialausgleichsleiter mit einem Erdungssystem, insbesondere mit einer oder mehrerer Erdungsschienen, verbunden. Dadurch wird die Bildung einer Potentialdifferenz der Vorrichtung gegenüber dem Erdpotential vermieden und somit die Entstehung von Funkenentladung, was in explosionsgefährdeten Bereichen ebenso vermieden werden muss wie Zündfunken innerhalb der Analysenleitung, durch die sich das Fluid entzünden könnte. Eine Verbindung der elektrisch leitenden Komponenten an ein Erdungssystem sorgt nun für einen Potential- bzw. Ladungsausgleich mit dem Erdpotential, so dass die Gefahr von plötzlichen und blitzartigen elektrischen Funkentladungen gebannt wird.

Der jeweilige Kanal bzw. das jeweilige Medienrohr ist vorzugsweise aus Polypropylen-Kunststoff bzw. thermoplastischem Kunststoff gefertigt, insbesondere aus PTFE, PFA, oder PVDF. Alternativ dazu kann er auch aus einem NE-Metall oder einer Metalllegierung, insbesondere legiertem oder hochlegiertem Edelstahl gefertigt sein. Ein anderes geeignetes Material ist Titan. Die Materialwahl richtet sich nach dem zu transportierenden Medium bzw. Fluid; insbesondere bei chemisch aggressiven bzw. chlorhaltigen Gasen eignen sich Metalle bzw. metallische Legierungen. Typische Kanaldurchmesser bei industriellen Anwendungen reichen von 4 mm bis 20 mm.

Bevorzugt ist eine Heizvorrichtung zur Temperierung des Mediums vorgesehen. Durch eine Heizung des Fluides kann eine Auskondensation des Fluides oder Anteilen davon während des Transportes durch den Kanal verhindert werden. Auf diese Weise wird ermöglicht, eine in der Vorrichtung zu transportierende Probe in ihrer ursprünglichen Zusammensetzung zu einer Untersuchungseinrichtung bzw. Analysenstation zu transportieren.

Bei der Ausführung mit einer Heizvorrichtung sind vorzugsweise sowohl die Heizvorrichtung als auch der jeweilige Kanal von der inneren Umhüllung umgeben. Auf diese Weise besteht ein direkter Kontakt zwischen der Heizvorrichtung und den Kanälen, so dass die Wärme direkt auf das Medium übertragen werden kann. Dadurch lässt sich auch die Wärmeentwicklung in dem jeweiligen Kanal besser berechnen bzw. vorhersehen und somit besser einregeln. Dies wäre aufgrund einer gegebenenfalls vorliegenden wärmeisolierenden Wirkung der inneren Umhüllung deutlich schwieriger.

Die Heizvorrichtung ist vorzugsweise als selbstregulierende Heizvorrichtung ausgebildet, das heißt, einmal auf eine gewünschte Solltemperatur eingestellt bzw. vorkonfiguriert wird diese Temperatur nur durch das Verhalten bzw. die Eigenschaften der Heizvorrichtung an sich und ohne externe Steuer- und Regelvorgänge gehalten. Alternativ dazu kann auch eine Steuer- und Regeleinheit vorgesehen sein, die die Temperatur des Mediums auf eine gewünschte Solltemperatur einregelt, wozu Temperaturfühler benutzt werden, die die Ist-Temperatur messen. Die Heizvorrichtung weist dann vorzugsweise Mittel zur Regelung der Temperatur auf, wobei durch Temperaturfühler der Ist-Wert der Temperatur bestimmt wird und durch eine elektronische Steuer- und Regeleinheit durch Variation der Stromstärke bzw. Spannung die gewünschte Temperatur eingeregelt wird. Vorteilhafterweise können auch Maximal- und/oder Minimaltemperatur angegeben werden, die nicht über- bzw. unterschritten werden dürfen.

Die Heizvorrichtung ist bevorzugt als Heizband ausgestaltet ist, welches an dem jeweiligen Kanal anliegt. Eine derartige Konfiguration erlaubt eine bauraumoptimierte Temperierung des Fluides in dem Kanal. Für eine gleichmäßige und konstante Heizung ist das Heizband vorzugsweise entlang des gesamten Kanals angeordnet. Die Heizfunktion wird vorteilhafterweise durch zwei in dem Heizband bzw. dem Heizbandkörper geführte Heizleiter erzeugt, die sich bei Anlegen einer Spannung durch den Ladungstransport erwärmen. Das Heizband ist vorzugsweise selbstregulierend, so dass sich beispielsweise die Eigenschaften des Materials des Heizbandkörpers in Abhängigkeit von der Temperatur so ändern, dass sich daraus ein Stromfluss ergibt, der zu der gewünschten Temperatur führt. Das Material des Heizbandes umfasst dann bevorzugt direkt leitende Polymere.

Alternativ zu einem Heizband kann die Heizvorrichtung auch als eine Anzahl von Heizrohren ausgebildet sein, die beispielsweise dampfbeheizt sind. Das heißt, durch das jeweilige Heizrohr wird heißer Dampf geleitet, der zumindest teilweise seine Wärme an das Fluid abgibt. Bevorzugt ist genau ein Dampfrohr vorgesehen, das an möglichst allen Kanälen direkt anliegt.

Die elektrisch isolierende Zwischenschicht, die zwischen der inneren und der äußeren Umhüllung angeordnet ist, ist vorzugsweise aus wärmedämmendem Material gefertigt. Als Material eignen sich insbesondere Thermo- oder Glasfaserflies oder auch Kombinationen der beiden, sowie Silikon oder Silikonschaum.

In Bezug auf das Verfahren wird die oben genannte Aufgabe erfindungsgemäß gelöst mit den Schritten
- Durchtrennung der Vorrichtung an wenigstens einer Stelle zur Bildung wenigstens eines Endstückes der Vorrichtung;
- Abdichten des Endstückes;
- Aufsetzen einer leitfähigen Kappe, insbesondere aus PTFE, auf das Endstück;
- Aufbringen eines leitfähigen Schrumpfschlauches auf die Kappe und bereichsweise den Außenmantel.

Dabei werden bevorzugt der jeweilige Kanal und/oder der jeweilige Potentialausgleichsleiter und/oder das Heizband durch Kappe durch jeweilige Öffnungen im Schrumpfschlauch geführt.

Der leitfähige Schrumpfschlauch befestigt die Kappe auf dem Mantel und stellt eine leitfähige Verbindung zwischen beiden her. Der Schrumpfschlauch ist dabei bevorzugt aus ableitfähigem PE, ableitfähigem Kleber auf PA-Basis, blei- und cadmiumfrei gebildet.

In einer bevorzugten Ausführungsform des Verfahrens werden an zwei Enden der Vorrichtung jeweils wie oben beschrieben jeweils eine Kappe und darauf jeweils ein Schrumpfschlauch aufgeschrumpft.

Die Vorteile der Erfindung liegen insbesondere darin, dass der ableitfähige Außenmantel aus glattem Material hergestellt werden kann, wodurch die Verlegung der Vorrichtung erleichtert wird. Der Außenmantel kann dicker und widerstandsfähiger ausgebildet werden als bekannte Ringwell-Mäntel, so dass die Lebensdauer des Außenmantels erhöht wird und Gefahren durch Zündfunken vermieden werden. Die Vorrichtung kann vor Ort konfektioniert werden. Die Vorrichtung ermöglicht ein sicheres Aufliegen des Außenmantels auf der leitfähigen Schicht, so dass eine Abführung von Ladung zuverlässig erfolgen kann. Da alle verwendeten Komponenten der Vorrichtung leitfähig sind, kann auch bei der Anfangs- oder Endkonfektion keine gefährliche Aufladung entstehen.

Ein Ausführungsbeispiel der Erfindung wird anhand von Zeichnungen näher erläutert. Darin zeigen in stark schematisierter Darstellung:
- Fig. 1: eine Vorrichtung zum Transport eines Mediums in einer bevorzugten Ausführungsform in einem Querschnitt;
- Fig. 2: die Vorrichtung gemäß Fig. 1 an einem ersten Ende in einer Draufsicht;
- Fig. 3: die Vorrichtung gemäß Fig. 1 an einem zweiten Ende in einer Draufsicht;
- Fig. 4: die Vorrichtung gemäß Fig. 1 am ersten Ende in einer perspektivischen Ansicht;
- Fig. 5: die Vorrichtung gemäß Fig. 1 am zweiten Ende in einer perspektivischen Ansicht.

Gleiche Teile sind in den Figuren mit denselben Bezugszeichen versehen.

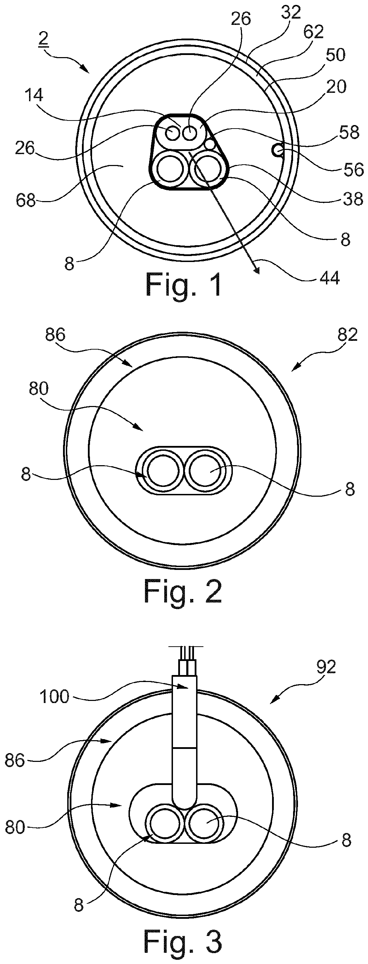

Eine Vorrichtung 2 zum Transport eines Mediums ist als Analysenleitung ausgestaltet und in Fig. 1 in einem Querschnitt dargestellt. Die Vorrichtung 2 dient zum Transport von Gasproben von einer Probeentnahmestelle zu einer Analyseneinrichtung, wobei Distanzen von mehreren Hundert Metern zurückgelegt werden können. Zum Transport des Gases in oder entgegengesetzt zu einer Axialrichtung der Vorrichtung 2 sind zwei rohrförmige Kanäle 8 bzw. Gasleiter vorgesehen, die aus PE-Material hergestellt sind. Zur Temperierung des Gases innerhalb der Kanäle 8 ist ein Heizband 14 vorgesehen, welches einen Heizbandkörper 20 und zwei in den Heizbandkörper 20 eingelassene Heizleiter 26 umfasst. Das Heizband 14 ist bevorzugt als elektrisches, selbstregelndes Heizband ausgebildet. Der Heizbandkörper 20 besteht bevorzugt aus leitenden Polymeren, die mit leitfähigem Ruß gemischt sind. Die Heizbandleistungen betragen zwischen 16 W/m bis 64 W/m bei 10°C. Der zur Beheizung des Mediums notwendige Strom hängt ab von der Länge des Heizbandes.

Alternativ kann auch ein Heizband vorgesehen sein, bei dem die Temperatur von einer Steuer- und Regeleinheit geregelt wird. Zur Temperaturerfassung sind dann Temperaturfühler an der Außenseite des Innenrohres montiert. Einerseits ist eine Begrenzung der Maximaltemperatur vorgesehen, andererseits erfolgt auch eine Regelung der Temperatur. Dabei wirkt sich die Maximaltemperatur gewissermaßen als Zwangsbedingung auf die Regelung aus, d.h. es wird sichergestellt, dass die gemessene Höchsttemperatur nicht überschritten wird. Damit diese auch zu der tatsächlich höchstmöglich vorkommenden Temperatur entspricht, sollte der oder sollten die Temperaturfühler im Bereich höchst anfallender Umgebungstemperaturen platziert werden. Für Anwendungen, bei denen eine Mindesttemperatur nicht unterschritten werden sollte, sollte der Temperaturfühler an der Stelle mit der niedrigsten Umgebungstemperatur installiert werden.

Der Begrenzer wird in der Regel auf die maximal (oder minimal) zulässige Temperatur eingestellt. Es können auch zwei Temperaturfühler eingesetzt werden, wobei der eine Temperaturfühler zur Begrenzung auf eine Minimaltemperatur und der andere Temperaturfühler zur Begrenzung auf eine Maximaltemperatur eingesetzt wird. Eine derartige Konfiguration eignet sich für Zonen mit stark schwankenden Umgebungstemperaturen. Der Regelungsprozess wird dann unter der Maßgabe durchgeführt, dass die Maximal- und/oder Minimaltemperatur dabei nicht über- bzw. unterschritten wird.

Die Vorrichtung 2 weist weiterhin einen Außenmantel 32 auf, der die inneren Komponenten gegenüber äußeren Einflüssen, Beschädigungen, Belastungen etc. abschirmt. Die Vorrichtung 2 bzw. Analysenleitung ist dazu ertüchtigt, in explosivgefährdeten Bereichen, insbesondere IIC-Bereichen, eingesetzt zu werden. Der Außenmantel 32 bzw. das Material, aus dem er gefertigt ist, ist dazu elektrisch leitfähig bzw. ableitfähig ausgebildet. Das Material des Außenmantels 32 ist dazu in der gezeigten bevorzugten Ausführungsform aus extrudiertem thermoplastischen Urethan mit einem homogen verteilten Anteil von 1 bis 6 Gew.-% CNTs, insbesondere mit 4 bis Gew.-% CNTs gefertigt. Die Vorrichtung 2 weist weitere Komponenten auf, die insbesondere in Kombination mit dem leitfähigen Außenmantel 32 eine effektive und schnelle Ableitung elektrischer Ladung ermöglichen und somit die Entstehung von Zündfunken auch in IIC-Bereichen vermeiden. Bei einem Anteil von 2 Gew.-% CNTs wurden bei Spannungen von 500V und 1000 V Widerstände von 100 kΩ·m bzw. 50 kΩ·m gemessen.

Bei 4 Gew.-% CNTs ergeben sich bei 500V/1000V Werte von 10 kΩ·m /5 kΩ·m. Bei noch höheren CNT-Anteilen ist der Widerstand nochmals geringer.

Die Vorrichtung 2 weist dazu zunächst eine innere Umhüllung 38 auf, die vorliegend als Aluminiumfolie ausgebildet ist. In einer Radialrichtung 44 gesehen ist innerhalb des Außenmantels 32 außerhalb der inneren Umhüllung 38 eine äußere Umhüllung 50 vorgesehen, welche ebenfalls als Aluminiumfolie ausgebildet ist. Die innere Umhüllung 38 und die äußere Umhüllung 50 erstrecken sich zylinderförmig entlang der Axialrichtung der Vorrichtung 2. Die innere Umhüllung 38 und die äußere Umhüllung 40 sind jeweils durch einen Potentialausgleichsleiter 58, 56 mit einem Erdungssystem verbunden, so dass beide Umhüllungen 38, 50 erstens das gleiche elektrische Potential aufweisen und zweitens dieses Potential mit dem Erdpotential identisch ist, so dass keine Potentialdifferenz gegenüber Erde besteht. Das bedeutet, wenn sich auf einer der beiden Umhüllungen 38, 50 elektrische Ladungen sammeln, erfolgt über den jeweiligen Potentialausgleichsleiter 58, 56 ein Ladungsausgleich gegen Erde.

Auf diese Weise werden Zündfunken bzw. elektrische blitzartige Entladungen verhindert. Diese könnten beispielsweise entstehen, wenn sich im Kanal 8 elektrische Ladungen trennen und dieser somit elektrisch aufgeladen wird und kein Potentialausgleich zum Außenmantel 32 erfolgen würde. Insbesondere die Kombination zwischen Außenmantel 32 und elektrisch leitend damit verbundener äußeren Umhüllung 50, welche radial innerhalb des Außenmantels 32 liegt, ermöglicht eine effektive und zuverlässige Ableitung von Ladungen.

Zwischen Außenmantel 32 und äußerer Umhüllung 50 ist eine die äußere Umhüllung umgebende Schicht 62 vorgesehen, die bevorzugt aus einer PETP-Folie besteht. Diese Schicht 62 ist aus produktionstechnischen Gründen vorgesehen, um beim Produktionsprozess der Analysenleitung Beschädigungen der äußeren Umhüllung 50 zu vermeiden. Sie fungiert somit gewissermaßen als Schutzschicht und erfüllt darüber hinaus im vorliegenden Ausführungsbeispiel keine technische Funktion.

In Radialrichtung 44 gesehen ist zwischen der inneren Umhüllung 38 und der äußeren Umhüllung 50 eine Zwischenschicht 68 aus Thermoflies angeordnet. Die Zwischenschicht 68 erfüllt also eine Doppelfunktion: Einerseits dient sie der elektrischen Isolation der beiden Umhüllungen 38, 50. Andererseits sorgt sie für eine Wärmeisolierung der beheizten Kanäle 8, so dass zu ihrer Beheizung Energie gespart werden kann. Weiterhin werden dadurch die Kanäle von äußeren Temperatureinflüssen abgeschirmt, so dass geringere Schwankungen der Temperatur des Fluides auftreten.

Die beschriebene Vorrichtung 2 kann vor Ort, das heißt bei ihrer konkreten Verlegung, konfektioniert, d.h. insbesondere in ihrer Länge angepasst werden. In FIG. 2 ist die Vorrichtung 2 gemäß FIG. 1 an einem ersten Ende 82 bzw. Anfang, welches dem Probenende entspricht, in einer Draufsicht dargestellt, wobei an dem Ende 82 ein Endstück 83 der Vorrichtung 2 gebildet ist. Dabei ist über den Außenmantel 32 eine Kappe 80 bzw. Endkappe gestülpt bzw. darauf aufgesetzt. Die Kappe ist bevorzugt aus PTFE gefertigt. Über die Kappe 80 und bereichsweise über den Außenmantel 32 ist ein Schrumpfschlauch 86 aus leitfähigem Material aufgeschrumpft. Auf diese Weise wird das Ende 82 bzw. Endstück 83 geschützt und gleichzeitig durch die Verwendung von leitfähigen Materialien für Kappe 80 und Schrumpfschlauich 86 die Bildung von Zündfunken verhindert.

In FIG. 3 ist die Vorrichtung 2 an einem zweiten Ende 92 dargestellt, welches dem Analysenende entspricht. Auch an diesem Ende sind eine Kappe 80 und ein Schrumpfschlauch 86 vorgesehen, die beiden aus elektrisch leitfähigem Material gefertigt sind. Weiterhin wird eine Spannungsversorgung 100 aus Kappe 80 und Schrumpfschlauch 86 herausgeführt.

Die beiden Enden der Vorrichtung 2 (Probenende, Analysenende) werden wie beschrieben vorzugsweise mit Endkappen versehen. In einer alternativen Ausführung werden schrumpfbare Endkappen verwendet, die einen Schutz gegen Eindringen von Feuchtigkeit und Staub bieten.

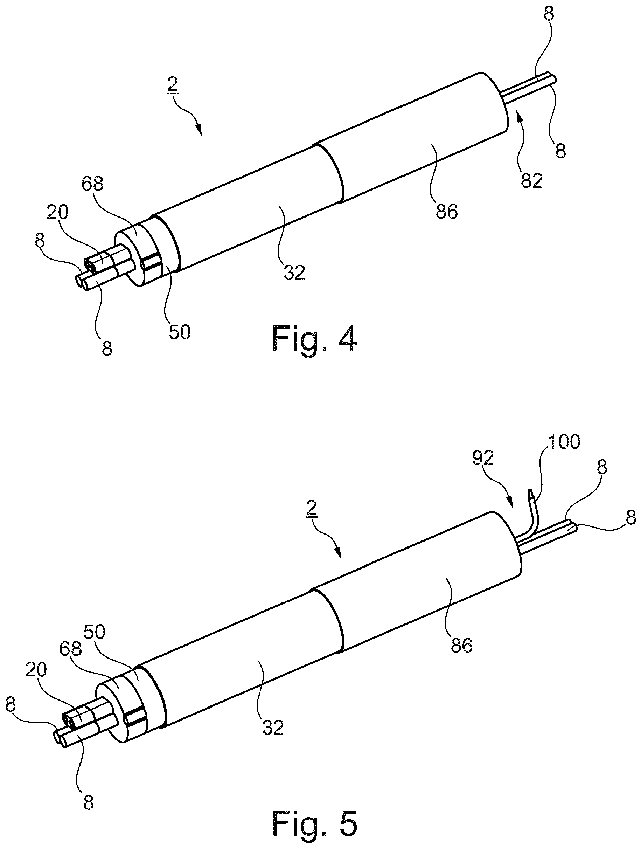

In den Figuren 4 und 5 ist jeweils die Vorrichtung 2 mit ihrem ersten 82 bzw. zweiten Ende 92 perspektivisch dargestellt. Die Vorrichtung 2 wird bevorzugt als ein auf einer Kabeltrommel aufgewickeltes bzw. aufgerolltes Rohrbündel bereitgestellt, das zum Verlegen dann vorsichtig von der Trommel abgespult wird. Bedarfsweise wird dann die Analysenleitung von der Trommel abgeschnitten bzw. getrennt. Auf die beiden dadurch entstehenden Enden werden jeweils dann die oben dargestellten Kappen 80 bzw. Schrumpfschläuche 86 aufgesetzt bzw. aufgeschrumpft.

Beide Enden müssen abgedichtet werden (z.B. mit Silikon) zum Schutz gegen Eindringen von Feuchtigkeit, Staub und möglicherweise Verschleppung von explosiven Gasen. Diese Abdichtung der Enden sorgt für eine Gasdichtigkeit der Vorrichtung an den Enden, wodurch eine mögliche Verschleppung von explosiven Gasen verhindert wird.

## Patentansprüche

1. Vorrichtung (2) zum Transport eines Mediums, mit wenigstens einem sich in einer Axialrichtung (10) erstreckendem Kanal (8), durch den das Medium geführt wird, wobei der jeweilige Kanal (8) von einer elektrisch leitenden inneren Umhüllung (38) umgeben ist, die mit einem Potentialausgleichsleiter (58) verbunden ist, und mit einem Außenmantel (32), wobei zwischen dem Kanal (8) und dem Außenmantel (32) eine elektrisch leitende äußere Umhüllung (50) vorgesehen ist, wobei die äußere Umhüllung (50) mit einem elektrisch leitenden Potentialausgleichsleiter (56) verbunden ist, wobei zwischen dem Kanal (8) und der äußeren Umhüllung (50) eine elektrisch isolierende Zwischenschicht (68) angeordnet ist, wobei die Zwischenschicht (68) aus wärmedämmendem Material gefertigt ist, wobei die Vorrichtung (2) wenigstens ein Endstück (82, 92) aufweist, auf dem eine Kappe (80) aufgebracht ist, **dadurch gekennzeichnet, dass** der Außenmantel (32) elektrisch leitfähig ausgebildet ist mit einem elektrischen Widerstand ≤ 10⁹ Ωm, wobei die Kappe (80) elektrisch leitfähig ist und wobei auf der Kappe (80) und bereichsweise auf dem Außenmantel (32) ein leitfähiger Schrumpfschlauch (86) aufgebracht ist, der die Kappe (80) befestigt und leitfähig mit dem Außenmantel (32) verbindet.

2. Vorrichtung (2) nach Anspruch 1, wobei der Außenmantel (32) aus einem thermoplastischen Kunststoff mit 1 bis 6 Gew.-% Carbon-Nano-Tubes gebildet ist.

3. Vorrichtung (2) nach Anspruch 2, wobei der wenigstens eine Kanal (8) aus thermoplastischem Kunststoff gefertigt ist.

4. Vorrichtung (2) nach einem der Ansprüche 1 bis 3, wobei wenigstens ein Kanal (8) aus einer Metalllegierung gefertigt ist.

5. Vorrichtung (2) nach einem der Ansprüche 1 bis 4, wobei eine Heizvorrichtung (14) zur Temperierung des Mediums vorgesehen ist.

6. Verfahren zur Konfektionierung der Vorrichtung (2) nach einem der Ansprüche 1 bis 5, mit den Schritten
• Durchtrennung der Vorrichtung (2) an wenigstens einer Stelle zur Bildung wenigstens eines Endstückes (82,92) der Vorrichtung;
• Abdichten des Endstückes (82, 92);
• Aufsetzen einer leitfähigen Kappe (80), insbesondere aus PTFE, auf das Endstück (82,92);
• Aufbringen eines leitfähigen Schrumpfschlauches (86) auf die Kappe (80) und bereichsweise den Außenmantel (32).

7. Verfahren nach Anspruch 6, wobei ein Schrumpfschlauch (86) verwendet wird, welcher aus ableitfähigem PE und/oder ableitfähigem Kleber auf PA-Basis besteht und der frei von Blei und Cadmium ist.

## Claims

1. Device (2) for transporting a medium, having at least one channel (8) which extends in an axial direction (10) and through which the medium is guided, wherein the respective channel (8) is surrounded by an electrically conductive inner envelope (38) which is connected to an equipotential bonding conductor (58), and having an outer casing (32), wherein an electrically conductive outer envelope (50) is provided between the channel (8) and the outer casing (32), wherein the outer envelope (50) is connected to an electrically conductive equipotential bonding conductor (56), wherein an electrically insulating intermediate layer (68) is arranged between the channel (8) and the outer envelope (50), wherein the intermediate layer (68) is made of heat-insulating material, wherein the device (2) has at least one end piece (82,92) on which a cap (80) is applied, **characterised in that** the outer casing (32) is electrically conductive with an electrical resistance of ≤ 10⁹ Ωm, wherein the cap (80) is electrically conductive and wherein a conductive heat-shrink tubing (86) is applied on the cap (80) and on regions of the outer casing (32), and secures the cap (80) and conductively connects the latter to the outer casing (32).

2. Device (2) according to claim 1, wherein the outer casing (32) is formed from a thermoplastic resin with 1 to 6 wt.% carbon nanotubes.

3. Device (2) according to claim 2, wherein the at least one channel (8) is made of thermoplastic resin.

4. Device (2) according to any of claims 1 to 3, wherein at least one channel (8) is made of a metal alloy.

5. Device (2) according to any of claims 1 to 4, wherein a heating device (14) is provided for tempering the medium.

6. Method for assembling the device (2) according to any of claims 1 to 5, having the steps of
- cutting the device (2) at at least one location to form at least one end piece (82, 92) of the device;
- sealing the end piece (82, 92);
- placing a conductive cap (80), in particular made of PTFE, on the end piece (82, 92);
- applying a conductive heat-shrink tubing (86) onto the cap (80) and onto regions of the outer casing (32).

7. Method according to claim 6, wherein a heat-shrink tubing (86) is used which consists of dissipative PE and/or dissipative PA-based adhesive and which is free of lead and cadmium.

## Revendications

1. Dispositif (2) destiné au transport d'un milieu, avec au moins un canal (8) s'étendant dans une direction axiale (10) et à travers lequel le milieu est guidé, dans lequel le canal (8) respectif est entouré d'un revêtement intérieur (38) électriquement conducteur relié à un conducteur de compensation de potentiel (58), et avec une gaine externe (32), dans lequel un revêtement extérieur (50) électriquement conducteur est prévu entre le canal (8) et la gaine externe (32), dans lequel le revêtement extérieur (50) est relié à un conducteur de compensation de potentiel (56) électriquement conducteur, dans lequel une couche intermédiaire (68) électriquement isolante est agencée entre le canal (8) et le revêtement extérieur (50), dans lequel la couche intermédiaire (68) est réalisée en matériau thermiquement isolant, dans lequel le dispositif (2) présente au moins une pièce terminale (82, 92) sur laquelle est appliquée une coiffe (80), **caractérisé en ce que** la gaine externe (32) est réalisée de manière électriquement conductrice avec une résistance électrique ≤ 10⁹ Ωm, dans lequel la coiffe (80) est électriquement conductrice et dans lequel un tube rétractable conducteur (86), qui immobilise la coiffe (80) et la relie de manière conductrice à la gaine externe (32), est appliqué sur la coiffe (80) et localement sur la gaine externe (32).

2. Dispositif (2) selon la revendication 1, dans lequel la gaine externe (32) est formée à partir d'une matière thermoplastique contenant entre 1 et 6 % en poids de nanotubes de carbone.

3. Dispositif (2) selon la revendication 2, dans lequel le au moins un canal (8) est en matière thermoplastique.

4. Dispositif (2) selon l'une quelconque des revendications 1 à 3, dans lequel au moins un canal (8) est réalisé en un alliage métallique.

5. Dispositif (2) selon l'une quelconque des revendications 1 à 4, dans lequel un dispositif de chauffage (14) destiné au contrôle de la température du milieu est prévu.

6. Procédé d'assemblage du dispositif (2) selon l'une quelconque des revendications 1 à 5, comprenant les étapes de
• sectionnement du dispositif (2) en au moins un point afin de former au moins une pièce terminale (82, 92) du dispositif ;
• obturation de la pièce terminale (82, 92) ;
• mise en place d'une coiffe conductrice (80), en particulier en PTFE, sur la pièce terminale (82, 92) ;
• application d'un tube rétractable conducteur (86) sur la coiffe (80) et localement sur la gaine externe (32).

7. Procédé selon la revendication 6, dans lequel on utilise un tube rétractable (86) qui est constitué de PE conducteur et/ou de colle conductrice à base de PA et qui est exempt de plomb et de cadmium.
